# EUROPÄISCHE PATENTSCHRIFT

(11) **EP 4 444 957 B1**
(45) Veröffentlichungstag und Bekanntmachung des Hinweises auf die Patenterteilung: **03.12.2025**
(21) Anmeldenummer: 22830822.7
(22) Anmeldetag: 07.12.2022
(51) Int. Cl.: E03B 1/04, E03C 1/00

(54) **ABWASSERWEICHE**
WASTE-WATER DIVERTER
DÉFLECTEUR D'EAUX USÉES

(30) Priorität: 10.12.2021 DE 102021214110
(43) Veröffentlichungstag der Anmeldung: 16.10.2024
(73) Patentinhaber: Revincus GmbH, 99423 Weimar (DE)
(72) Erfinder: DRECHSEL, Felix Konstantin, 99423 Weimar (DE); SCHAEFER, Ben, 98693 Ilmenau (DE)
(74) Vertreter: Liedtke & Partner Patentanwälte
(86) Internationale Anmeldenummer: PCT/EP2022/084748
(87) Internationale Veröffentlichungsnummer: WO 2023/104862

(56) Entgegenhaltungen:
- WO-A1-2016/170247
- CA-A1- 2 592 294
- US-A1- 2013 048 087

## Beschreibung

Die Erfindung betrifft eine Abwasserweiche gemäss dem Oberbegriff von Anspruch 1.

WO 2020/148230 A1 beschreibt eine Vorrichtung und ein Verfahren zur Wärmerückgewinnung aus Grauwasser mit einem Wärmetauscher, wobei ein Grobfilter für das Grauwasser vorgesehen ist, um ein Verschmutzen des Wärmetauschers zu verhindern oder zu verringern.

WO 2016/170247 A1 beschreibt eine sanitäre Haushaltsanlage, die einen Behälter zum Sammeln von Haushaltsabwasser aufweist, der mit einem Netz zum Ableiten von Abwasser verbunden ist, wobei die sanitäre Anlage eine Abwasserrückgewinnungsvorrichtung umfasst, die umfasst: einen Abwasserrückgewinnungsbehälter; ein mit dem Sammelbehälter verbundenes Element zum Umleiten von Abwasser zum Ableitungsnetz und zum Rückgewinnungsbehälter; ein Mittel zum Betätigen des Umleitungselements, um Abwasser in Richtung des Rückgewinnungsbehälters umzuleiten; und ein Mittel zum Absaugen von Abwasser aus dem Rückgewinnungsbehälter.

CA 2 592 294 A1 beschreibt eine Sanitärvorrichtung zum Anschluss an ein Abwasserrohr, das Grauwasser aus einem Gebäude führt, zur selektiven Umleitung und Filterung des Grauwassers für die Wiederverwendung. Das Gerät besteht aus einem Behälter mit drei Rohranschlusspunkten und einem gasdichten Grauwasserfilter-Zugangsdeckel. Das Gerät verfügt über einen extern bedienbaren Ventilschalter, mit dem ein Benutzer gezielt ein internes Umleitungsventil betätigen kann, das den Grauwasserfluss so leitet, dass er zur Entsorgung aus dem Gerät abgelassen wird, oder alternativ zu einem abnehmbaren Grauwasserfilter und dann als gefiltertes Grauwasser zur Wiederverwendung aus dem Gerät abgelassen wird. Das Gerät verfügt über einen internen ausfallsicheren Überlauf, der es dem Grauwasser ermöglicht, den Grauwasserfilter zu umgehen, wenn der Abfluss des gefilterten Grauwassers aus dem Gerät durch einen verstopften Filter oder eine andere Blockierung blockiert ist, wenn das Gerät in den Grauwasserwiederverwendungsmodus geschaltet wird, ohne den fortgesetzten normalen freien Abfluss des Grauwassers aus den Sanitärarmaturen des Gebäudes einzuschränken oder zu begrenzen.

US 2013/0048087 A1 beschreibt eine Grauwassertrennventilbaugruppe, die einen Hauptkörperabschnitt, einen von einem Benutzer fernbedienbaren Ventilmechanismus, einen mit dem Ventilmechanismus funktional verbundenen Motor, einen Empfänger in elektrischer Verbindung mit dem Motor und eine Fernbedienung umfasst, die einen mit dem Empfänger in Verbindung stehenden Sender zum Betätigen des Ventilmechanismus umfasst. Der Hauptkörperabschnitt umfasst einen Einlass, der bei Verwendung mit einer Grauwasserquelle verbunden ist, einen ersten Auslass, der bei Verwendung mit einer Abwasserleitung verbunden ist, und einen zweiten Auslass, der bei Verwendung mit einer Grauwasserleitung verbunden ist. Der Einlass, der erste Auslass und der zweite Auslass umfassen alle keine Nabenanschlüsse. Die Fernbedienung dient dazu, das durch den Einlass empfangene Grauwasser entweder durch den ersten oder den zweiten Auslass zu leiten.

Der Erfindung liegt die Aufgabe zu Grunde, eine alternative Abwasserweiche anzugeben.

Die Aufgabe wird erfindungsgemäß gelöst durch eine Abwasserweiche gemäß Anspruch 1.

Vorteilhafte Ausgestaltungen der Erfindung sind Gegenstand der Unteransprüche. Eine erfindungsgemäße Abwasserweiche umfasst ein Gehäuse, das einen Hohlraum umschließt, wobei an einem oberen Ende des Gehäuses ein Abwasserzulauf angeordnet ist, der in den Hohlraum mündet, wobei an einem unteren Ende des Gehäuses ein Grauwasserablauf und ein Schwarzwasserablauf angeordnet sind, die mit dem Hohlraum verbunden sind, wobei im Hohlraum eine Führungsplatte mittels eines Antriebs zwischen einer ersten Position und einer zweiten Position um eine Drehachse schwenkbar angeordnet ist, derart, dass durch den Abwasserzulauf zulaufendes Abwasser von der Führungsplatte in der ersten Position in den Grauwasserablauf geleitet und der Schwarzwasserablauf versperrt und in der zweiten Position der Grauwasserablauf von der Führungsplatte versperrt und das Abwasser in den Schwarzwasserablauf geleitet wird. Die Drehachse kann durch eine Drehwelle definiert sein, die durch den Antrieb drehbar sein kann. Beispielsweise ist die Drehwelle an einer Kante der Führungsplatte befestigt.

In einer Ausführungsform schlägt die Führungsplatte in der ersten Position an einem ersten Anschlag einer Innenfläche des Gehäuses auf der Seite des Schwarzwasserablaufs an, wobei diese Innenfläche insbesondere eine Stufe aufweisen kann, derart, dass die Innenfläche in Gebrauchslage oberhalb des ersten Anschlags zum Hohlraum hin vorspringt.

In einer Ausführungsform ist an einer von der Drehachse entfernten Kante der Führungsplatte ein Sieb schwenkbar angelenkt, das in der ersten Position im Abwasserstrom zwischen dem Abwasserzulauf und dem Grauwasserablauf liegt und in der zweiten Position nicht im Abwasserstrom liegt. Auf diese Weise kann Grauwasser gefiltert werden während Schwarzwasser ohne Filterung durchgeleitet wird. Das gefilterte Grauwasser kann dann einer weiteren Verwendung zugeführt werden.

In einer Ausführungsform ist eine von der Führungsplatte entfernte Kante des Siebes an einem Ende mindestens einer Zugfeder befestigt, deren anderes Ende an oder nahe der Wandung des Gehäuses befestigt ist. Auf diese Weise kann eine Führung des Siebes, insbesondere beim Schwenken in die zweite Position, erfolgen oder unterstützt werden. In einer Ausführungsform sind die Kanten der Führungsplatte, die zu den Seiten des Gehäuses weisen, in denen die Drehachse oder Drehwelle gelagert ist, so geformt oder gekantet, dass das abfließende Wasser in den Grauwasserabfluss geleitet wird, wenn die Führungsplatte in der ersten Position ist.

In einer Ausführungsform ist das Sieb in der zweiten Position in eine Tasche des Hohlraums verschoben.

In einer Ausführungsform ist eine Rückspüldüse in der Wandung des Gehäuses angeordnet, die auf eine Unterseite des in der zweiten Position mit einem Gefälle in Richtung des Schwarzwasserablaufs schräg stehenden Siebes gerichtet ist. Auf diese Weise kann das in der zweiten Position schräg stehende Sieb von seiner Unterseite her gespült werden, insbesondere mit klarem Spülwasser. Dabei fließt aus dem Sieb rückgespülter Filterkuchen zusammen mit dem Spülwasser entlang des Siebes zum Schwarzwasserablauf.

In einer Ausführungsform ist ferner eine flexible Lippe angeordnet, die durch die Bewegung des Siebes während des Schwenkens von der ersten Position zur zweiten Position an dessen Oberseite zur Führungsplatte hin entlang streicht und somit Filterkuchen von der Oberfläche des Siebes zum Schwarzwasserablauf hin abstreift.

In einer Ausführungsform ist die Lippe so positioniert, dass bei Erreichen der zweiten Position ein Spalt zwischen der Lippe und dem Sieb entsteht, so dass die Lippe den Ablauf des Spülwassers beim Rückspülen mittels der Rückspüldüse nicht behindert.

In einer Ausführungsform ist eine Führung für die von der Führungsplatte entfernte Kante des Siebes im Gehäuse angeordnet, derart, dass die von der Führungsplatte entfernte Kante des Siebes gegen Ende der Schwenkbewegung zur zweiten Position hin nach oben geführt wird, um den Spalt zu schaffen.

Gemäß einem Aspekt der vorliegenden Erfindung ist ein Abwassersystem vorgesehen, umfassend mindestens eine Abwasserweiche wie oben beschrieben, wobei stromaufwärts von der Abwasserweiche eine Sensorik angeordnet ist, die dazu konfiguriert ist, zu signalisieren, wenn es sich bei dem durchfließenden oder als nächstes erwarteten Abwasser um Schwarzwasser handelt, wobei eine mit dieser Sensorik und mit dem Antrieb der Abwasserweiche verbundene Steuerung angeordnet ist, die dazu konfiguriert ist, bei Signalisierung von Schwarzwasser den Antrieb so anzusteuern, dass die Führungsplatte in die zweite Position geschwenkt wird. Die Sensorik kann beispielsweise einen Schalter oder Sensor umfassen, der die Betätigung einer Spültaste einer Toilettenspülung direkt oder indirekt detektiert und damit Schwarzwasser signalisiert. Eine mit dieser Sensorik drahtlos oder drahtgebunden verbundene und mit dem Antrieb der Abwasserweiche verbundene Steuerung kann in diesem Fall den Antrieb so ansteuern, dass die Führungsplatte in die zweite Position geschwenkt wird. Eine Spannungsversorgung für die Sensorik kann beispielsweise mittels eines Generators erfolgen, der durch ein Wasserrad in einer Zulaufleitung der Toilettenspülung, insbesondere stromaufwärts von der Spültaste, beispielsweise in der Zulaufleitung eines Spülkastens, angetrieben wird. In einer möglichen Ausführungsform kann dieser Generator selbst Teil der Sensorik sein und die Betätigung der Spültaste anhand des dadurch ausgelösten Durchflusses in der Zulaufleitung indirekt detektieren.

In einer Ausführungsform ist die Steuerung ferner dazu konfiguriert, die Führungsplatte standardmäßig in die erste Position zu schwenken.

In einer Ausführungsform ist ein Bypass angeordnet, der bei Rückstau in der Abwasserweiche Abwasser vom Abwasserzulauf zum Schwarzwasserablauf leitet.

In einer Ausführungsform ist der Grauwasserablauf mit einer Vorrichtung zur Wärmerückgewinnung verbunden, die dazu konfiguriert ist, in einem Wärmetauscher Trinkwasser und/oder Heizungswasser einer Warmwasserheizung durch Abwärme aus dem Grauwasser zu erwärmen.

Ausführungsbeispiele der Erfindung werden im Folgenden anhand von Zeichnungen näher erläutert. Darin zeigen:
- Figur 1: eine schematische Schnittansicht einer Abwasserweiche in einer Gebrauchslage,
- Figur 2: eine schematische Seitenansicht der Abwasserweiche in der Gebrauchslage,
- Figur 3: eine schematische Ansicht der Abwasserweiche von oben,
- Figur 4: eine schematische Schnittansicht der Abwasserweiche in der Gebrauchslage mit einer Führungsplatte in einer ersten Position,
- Figur 5: eine schematische Schnittansicht der Abwasserweiche in der Gebrauchslage mit einer Führungsplatte in einer zweiten Position,
- Figur 6: eine weitere schematische Seitenansicht der Abwasserweiche in der Gebrauchslage,
- Figur 7: eine weitere schematische Seitenansicht der Abwasserweiche in der Gebrauchslage,
- Figur 8: eine schematische Ansicht der Abwasserweiche von unten,
- Figur 9: eine weitere schematische Schnittansicht der Abwasserweiche,
- Figur 10: eine weitere schematische Seitenansicht der Abwasserweiche in der Gebrauchslage,
- Figur 11: eine weitere schematische Schnittansicht der Abwasserweiche,
- Figur 12: eine weitere schematische Schnittansicht der Abwasserweiche in der Gebrauchslage, und
- Figur 13: eine schematische Ansicht eines Abwassersystems mit der Abwasserweiche.

Einander entsprechende Teile sind in allen Figuren mit den gleichen Bezugszeichen versehen.

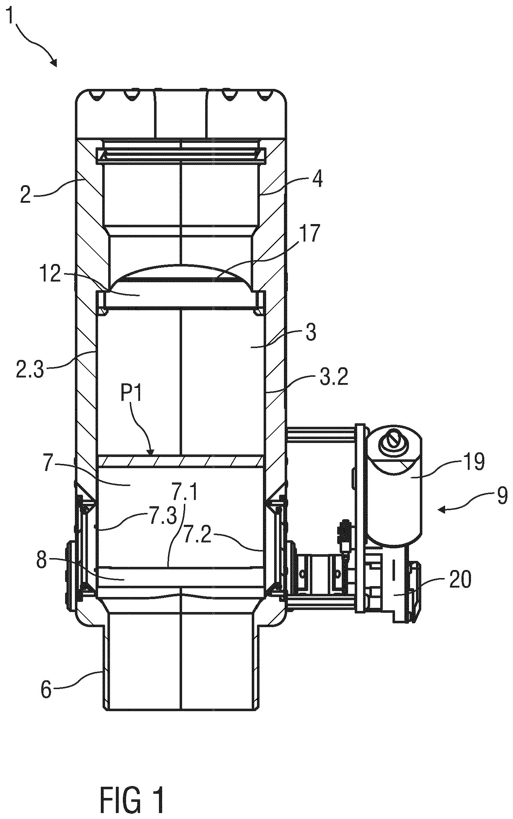

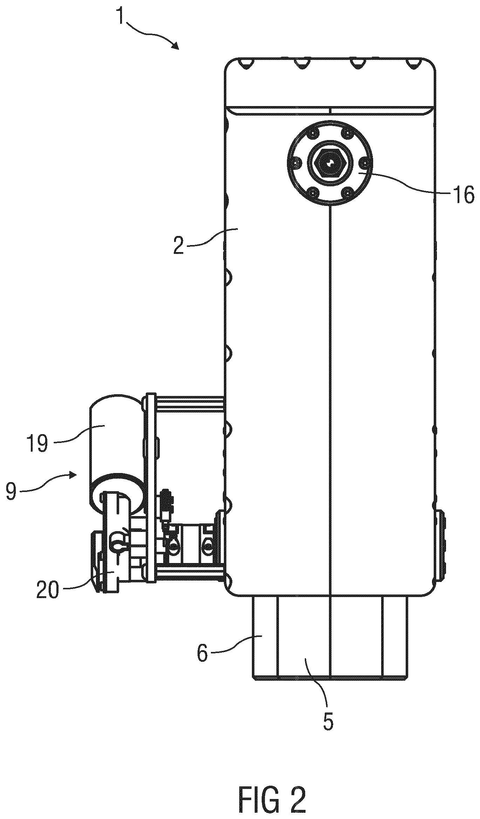

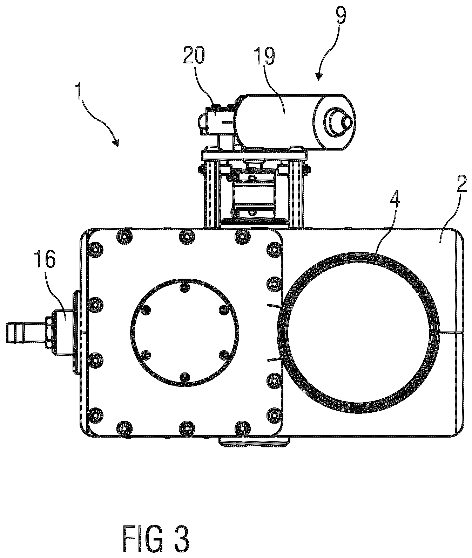

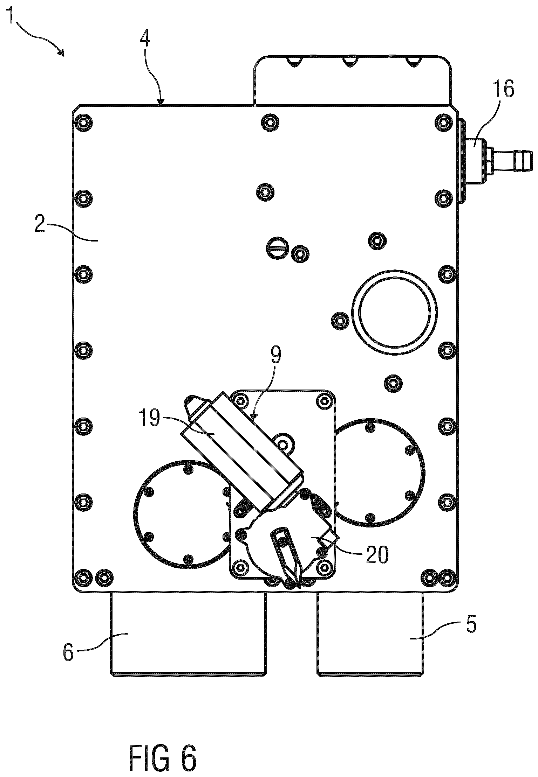

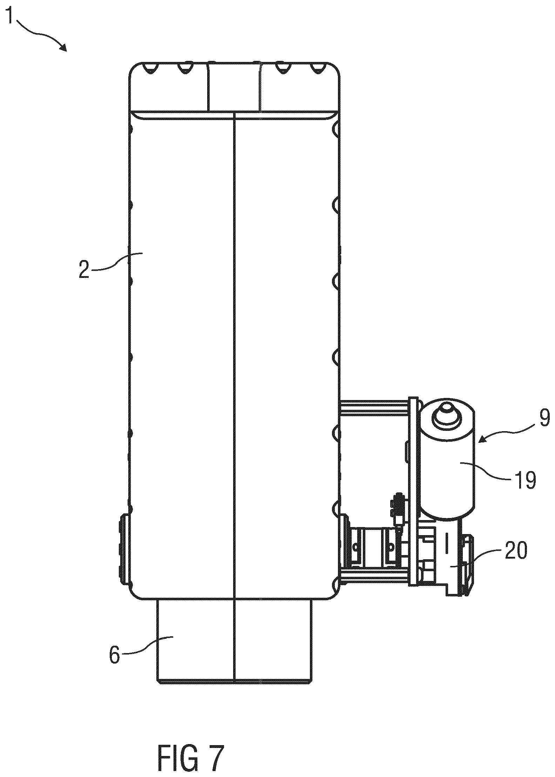

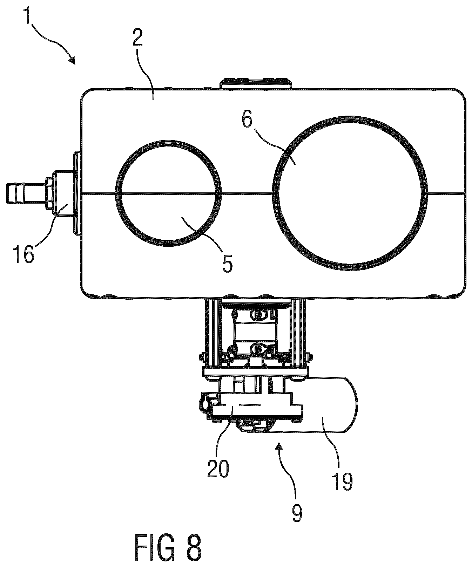

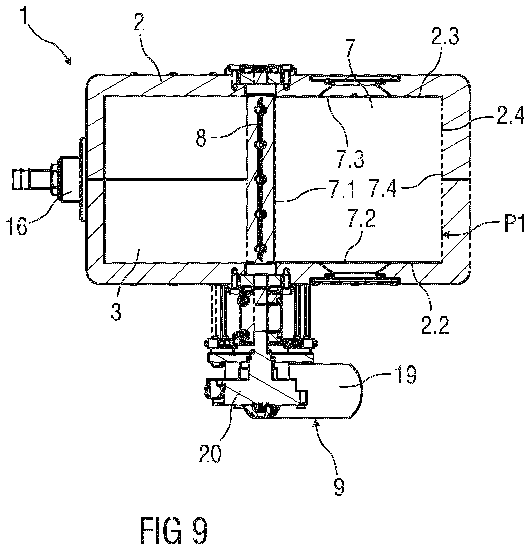

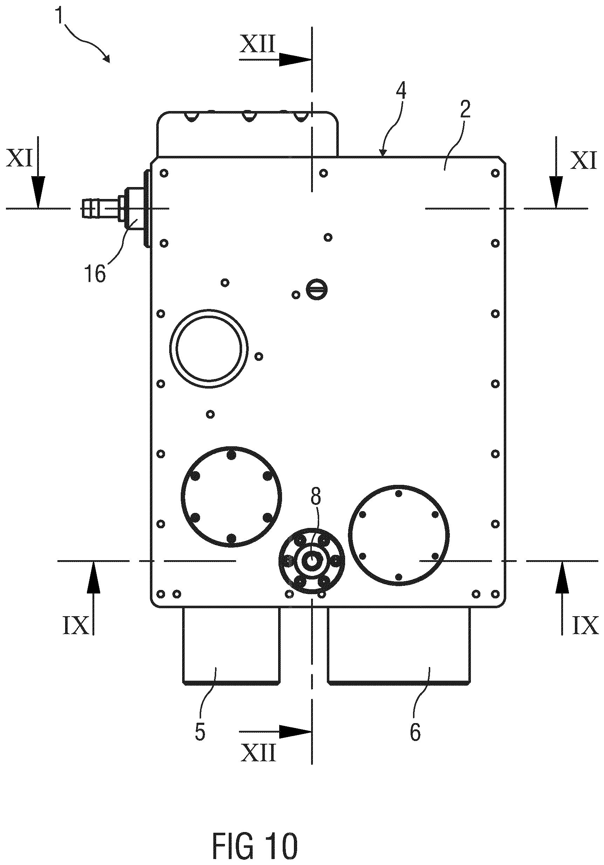

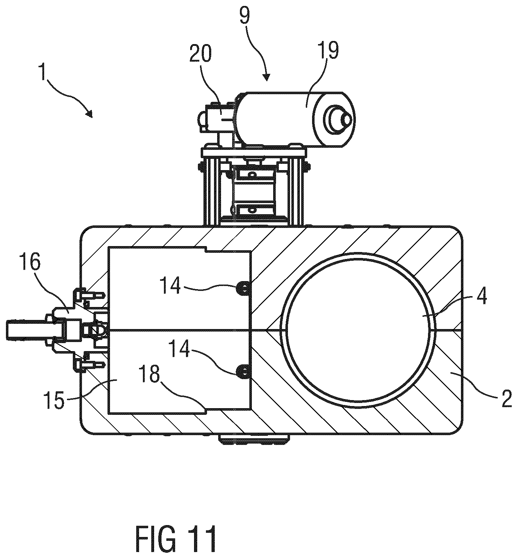

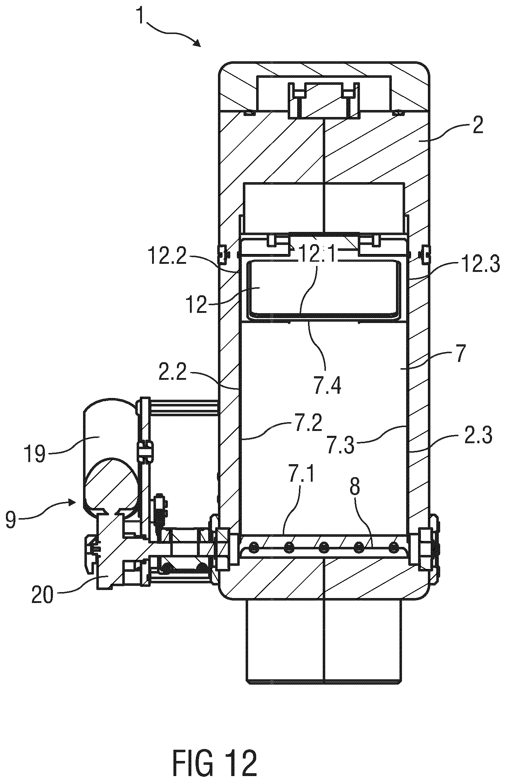

**Figuren 1 bis 12** zeigen schematische Ansichten einer Abwasserweiche 1.

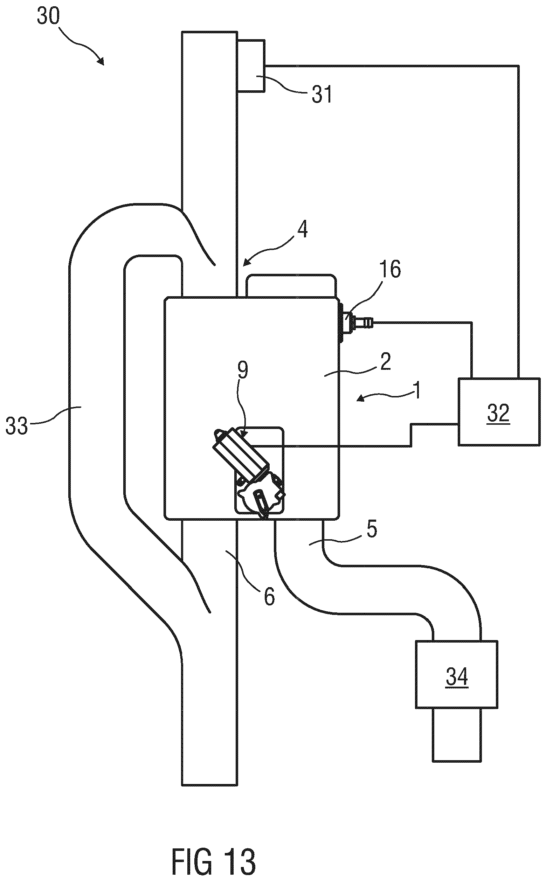

In den Figuren 1, 2, 4 bis 7, 10 und 12 ist die Abwasserweiche 1 in einer Gebrauchslage dargestellt, in der sie typischerweise in einem Abwassersystem 30 (in **Figur 13** gezeigt) installiert werden soll. Im Kontext der vorliegenden Erfindung verwendete Lage- und Richtungsbezeichnungen wie oben und unten beziehen sich auf diese Gebrauchslage, sofern nicht anders angegeben.

Die Abwasserweiche 1 umfasst ein Gehäuse 2, das einen Hohlraum 3 umschließt. An einem oberen Ende des Gehäuses 2 ist ein Abwasserzulauf 4 angeordnet, der in den Hohlraum 3 mündet und beispielsweise als Muffe ausgebildet sein kann, in die ein Ende eines Abwasserrohrs eingeschoben werden kann. An einem unteren Ende des Gehäuses 2 sind ein Grauwasserablauf 5 und ein Schwarzwasserablauf 6 angeordnet, die mit dem Hohlraum 3 verbunden sind und beispielsweise jeweils als Nippel ausgebildet sein können, die in jeweilige Muffen von Abwasserrohren eingeschoben werden können.

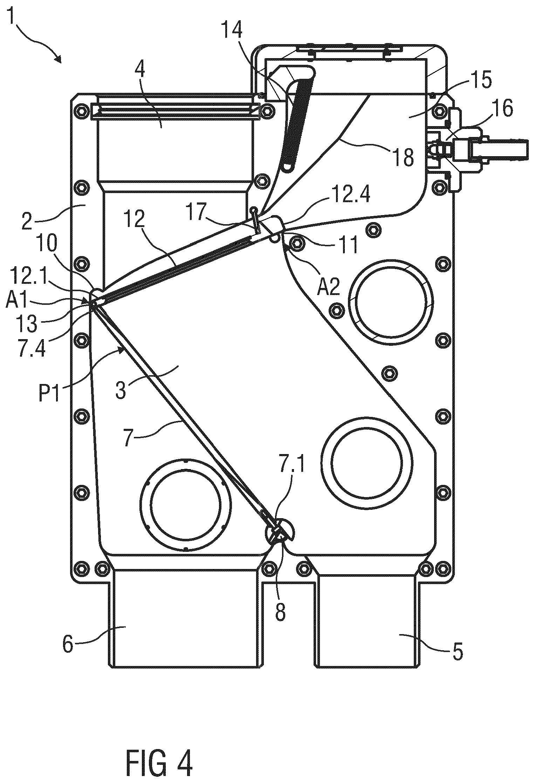

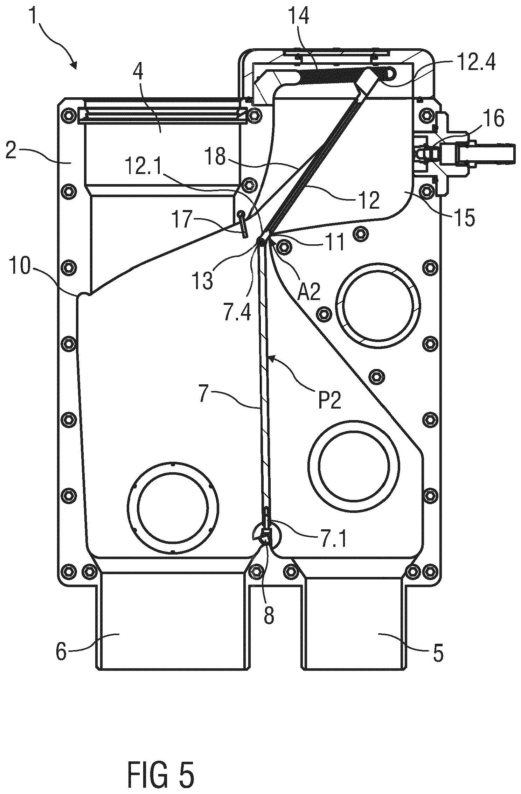

Im Hohlraum 3 ist eine Führungsplatte 7 angeordnet, die zwischen einer ersten Position P1, wie in Figur 4 dargestellt, und einer zweiten Position P2, wie in Figur 5 dargestellt, schwenkbar ist, derart, dass durch den Abwasserzulauf 4 zulaufendes Abwasser in der ersten Position P1 in den Grauwasserablauf 5 geleitet wird und in der zweiten Position P2 in den Schwarzwasserablauf 6 geleitet wird.

Die Führungsplatte 7 ist beispielsweise an einer Drehwelle 8 befestigt, die in einem unteren Bereich des Hohlraums 3 zwischen dem Grauwasserablauf 5 und dem Schwarzwasserablauf 6 angeordnet und im Gehäuse 2 drehbar gelagert ist. Die Drehwelle 8 ist mit einem Antrieb 9 verbunden, der beispielsweise einen Motor 19, insbesondere einen Elektromotor, und optional ein Getriebe 20, beispielsweise ein Schneckengetriebe, aufweisen kann. Der Antrieb 9 kann insbesondere außerhalb des Gehäuses 2 angeordnet sein. In diesem Fall ist die Drehwelle 8 aus dem Gehäuse 2 herausgeführt. In anderen Ausführungsformen kann der Antrieb 9 einen pneumatischen Zylinder aufweisen.

Zumindest über einen Schwenkbereich der Führungsplatte 7 zwischen der ersten Position P1 und der zweiten Position P2 weisen zwei einander gegenüberliegende Innenflächen 2.2, 2.3 des Gehäuses 2, die von einander gegenüberliegenden Kanten 7.2, 7.3 der Führungsplatte 7 überstrichen werden, jeweils eine Kontur auf, die zu einer Kontur der jeweiligen Kante 7.2, 7.3 der Führungsplatte 7 komplementär ist. Beispielsweise kann die Führungsplatte 7 rechteckig ausgebildet sein, wobei eine erste Kante 7.1 des Rechtecks an der Drehwelle 8 befestigt ist und eine an die erste Kante 7.1 angrenzende zweite Kante 7.2 und eine an die erste Kante 7.1 angrenzende dritte Kante 7.3 des Rechtecks beim Schwenken jeweils eine Innenfläche 2.2, 2.3 des Gehäuses 2 überstreichen. Dabei müssen die Kanten 7.2, 7.3 die Innenflächen 2.2, 2.3 nicht berühren, sondern können mit einem Abstand geführt sein, um ein Verklemmen zu verhindern. Die Innenflächen 2.2, 2.3 sind dabei zumindest im Schwenkbereich parallel zueinander. Beispielsweise kann das Gehäuse 2 hierzu im Wesentlichen quaderförmig ausgebildet sein.

In der dargestellten Ausführungsform befindet sich der Schwarzwasserablauf 6 im Wesentlichen senkrecht unter dem Abwasserzulauf 4, während der Grauwasserablauf 5 sich seitlich vom Schwarzwasserablauf 6 befindet. In der ersten Position P1 verläuft die Führungsplatte 7 daher schräg durch den Hohlraum 3 und liegt mit einer vierten Kante 7.4, die der ersten Kante 7.1 gegenüberliegt, an einem ersten Anschlag A1 einer Innenfläche 2.4 des Gehäuses 2 auf der Seite des Schwarzwasserablaufs 6 an oder befindet sich zumindest in der Nähe dieser Innenfläche 2.4. Diese Innenfläche 2.4 kann eine Stufe 10 aufweisen, derart, dass die Innenfläche 2.4 oberhalb des ersten Anschlags A1 zum Hohlraum 3 hin vorspringt. Die Stufe 10 kann eine leichte Hinterschneidung aufweisen. Die Stufe 10 verhindert, dass das Abwasser auf den Bereich zwischen dem Sieb 12 und der Innenfläche 2.4 auftrifft, so dass dieses zumindest überwiegend durch das Sieb 12 rinnt. Die Stufe 10 kann sich ferner auch auf die Innenflächen 2.2 und 2.3 erstrecken. Die Stufe 10 muss dabei nicht notwendig horizontal ausgerichtet sein, sondern kann beliebig, beispielsweise schräg verlaufen. In einer Ausführungsform sind die Kanten der Führungsplatte 7, die zu den Innenflächen 2.2 und 2.3 des Gehäuses 2 weisen, in denen die Drehachse oder Drehwelle 8 gelagert ist, so geformt oder gekantet, dass das abfließende Wasser in den Grauwasserabfluss 5 geleitet wird, wenn die Führungsplatte 7 in der ersten Position P1 ist. Hierdurch wird ebenfalls bewirkt, dass das Abwasser zumindest überwiegend durch das Sieb 12 rinnt.

In der zweiten Position P2 kann die Führungsplatte 7 beispielsweise an einem zweiten Anschlag A2 im Gehäuse 2 oder in der Nähe eines solchen zweiten Anschlags A2 senkrecht oder annähernd senkrecht stehen. Es könnte jedoch auch vorgesehen sein, dass der zweite Anschlag A2 im Gehäuse 2 an einer solchen Position angeordnet ist, dass die Führungsplatte 7 in der zweiten Position P2 über eine senkrechte Position hinaus geschwenkt ist. Insbesondere kann vorgesehen sein, dass der zweite Anschlag A2 an einem in den Hohlraum 3 hinein ragenden Vorsprung 11 des Gehäuses 2 angeordnet ist.

An der vierten Kante 7.4 der Führungsplatte 7 ist ein Sieb 12 schwenkbar angelenkt, wobei eine Schwenkachse 13, um die das Sieb 12 schwenkbar ist, parallel zur vierten Kante 7.4 der Führungsplatte 7 verläuft. Das Sieb 12 kann ebenfalls rechteckig ausgebildet sein und ist beispielsweise mit einer ersten Kante 12.1 an der Schwenkachse 13 befestigt. Eine an die erste Kante 12.1 angrenzende zweite Kante 12.2 überstreicht beim Schwenken die Innenfläche 2.2, und eine an die erste Kante 12.1 angrenzende dritte Kante 12.3 des Siebs 12 überstreicht beim Schwenken die Innenfläche 2.3 des Gehäuses 2. Dabei müssen die Kanten 12.2, 12.3 die Innenflächen 2.2, 2.3 nicht berühren, sondern können mit einem Abstand geführt sein, um ein Verklemmen zu verhindern.

Eine der ersten Kante 12.1 gegenüberliegende vierte Kante 12.4 ist an einem Ende mindestens einer Zugfeder 14 befestigt, deren anderes Ende an oder nahe der Wandung des Gehäuses 2 befestigt ist, beispielsweise an oder nahe einer oberen Wandung in einer Tasche 15 des Hohlraums 3 seitlich neben dem Abwasserzulauf 4. Eine Länge des Siebes 12 zwischen der ersten Kante 12.1 und der gegenüberliegenden vierten Kante 12.4 kann so bemessen sein, dass die vierte Kante 12.4 am Vorsprung 11 im Bereich des zweiten Anschlags A2 anliegt oder befindet sich zumindest in der Nähe des Vorsprungs 11, wenn die Führungsplatte 7 in der ersten Position P1 ist.

In der ersten Position P1 ist damit der Hohlraum 3 durch das Sieb 12 in einen über dem Sieb 12 liegenden Teil und einen unter dem Sieb 12 liegenden Teil geteilt, so dass durch den Abwasserzulauf 4 zufließendes Abwasser das Sieb 12 passieren muss, wobei ausgefilterte Feststoffe auf dem Sieb 12 verbleiben. Die Führungsplatte 7 unterteilt den unter dem Sieb 12 liegenden Teil nochmals so, dass das gefilterte Abwasser die Schräge der Führungsplatte 7 entlang zum Grauwasserablauf 5 fließt, während der Zugang zum Schwarzwasserablauf 6 durch die Führungsplatte 7 versperrt ist.

In der zweiten Position P2 befindet sich das Sieb 12 in der Tasche 15 und somit nicht im Zustrom aus dem Abwasserzulauf 4. Die Führungsplatte 7 oder das Sieb 12 im Bereich seiner ersten Kante 12.1 liegt am zweiten Anschlag A2 an oder befindet sich zumindest in der Nähe des zweiten Anschlags A2, so dass die Führungsplatte 7 den Zugang zum Grauwasserablauf 5 versperrt und Abwasser aus dem Abwasserzulauf 4 ungefiltert in den Schwarzwasserablauf 6 fließt.

In einer Ausführungsform kann eine Rückspüldüse 16 vorgesehen sein, insbesondere in der vom Abwasserzulauf 4 am weitesten entfernten Außenwand und in die Tasche 15 hinein gerichtet, so dass das in der zweiten Position P2 in der Tasche 15 schräg stehende Sieb 12 von seiner Unterseite her gespült werden kann, insbesondere mit klarem Spülwasser. Dabei fließt aus dem Sieb 12 rückgespülter Filterkuchen zusammen mit dem Spülwasser entlang des Siebes 12 zum Schwarzwasserablauf 6. Die Rückspülung kann beispielsweise in einem vorgegebenen zeitlichen Intervall oder volumengesteuert nach einer bestimmten Durchflussmenge ausgelöst werden. Hierzu kann ein Volumenstrommesser vorgesehen sein.

Zwischen der Tasche 15 und dem Abwasserzulauf 4 kann oberhalb des Siebes 12 von der Innenfläche 2.2 zur Innenfläche 2.3 hin verlaufend eine zum Sieb 12 gerichtete flexible Lippe 17 vorgesehen sein, die durch die Bewegung des Siebes 12 während des Schwenkens von der ersten Position P1 zur zweiten Position P2 an dessen Oberseite entlang streicht und somit Filterkuchen von der Oberfläche des Siebes 12 zum Schwarzwasserablauf 6 hin abstreift. Die Lippe 17 befindet sich dabei in einer solchen Position, dass bei Erreichen der zweiten Position P2 ein Spalt zwischen der Lippe 17 und dem Sieb 12 entsteht, so dass die Lippe 17 den Ablauf des Spülwassers beim Rückspülen mittels der Rückspüldüse 16 nicht behindert. Der Spalt entsteht beispielsweise, indem die erste Kante 12.1 des Siebs 12 über die Lippe 17 hinaus geschwenkt wird und die Zugfeder 14 die vierte Kante 12.4 des Siebes 12 nach oben zieht. In den Innenflächen 2.2, 2.3 kann jeweils eine Nockenbahn 18 vorgesehen sein, die jeweils einen an der vierten Kante 12.4 des Siebes 12 angeordneten, hier jedoch nicht dargestellten Nocken zumindest von oben her so führt, dass die vierte Kante 12.4 des Siebs 12 gegen Ende der Schwenkbewegung zur zweiten Position P2 hin, von der Zugfeder 14 gezogen, nach oben geführt wird, um den Spalt zu schaffen. Die Zugfeder 14 hat zudem die Aufgabe, das Sieb 12 gegen die Lippe 17 gezogen zu halten. Die Nockenbahn 18 hat den Zweck, das Sieb 12 in einem für die Rückspülung geeigneten Winkel zu führen. Die Nockenbahn kann beispielsweise als eine gefräste Kante ausgeführt sein, über die das Sieb 12 oder ein Rahmen des Siebes gleitet.

**Figur 13** ist eine schematische Ansicht eines Abwassersystems 30 mit der Abwasserweiche 1.

Die Abwasserweiche 1 kann in einem Abwassersystem 30 eines Gebäudes oder einer anderen Anlage installiert werden, in dem Abwasser sowohl als Schwarzwasser als auch als Grauwasser anfallen kann. Mittels der Abwasserweiche 1 kann dieses Abwasser in Grauwasser und Schwarzwasser aufgeteilt werden. Hierfür kann gegebenenfalls eine stromaufwärts von der Abwasserweiche 1 angeordnete Sensorik 31 vorgesehen sein, die dazu konfiguriert ist zu detektieren, ob es sich bei dem durchfließenden oder als nächstes erwarteten Abwasser um Grauwasser oder Schwarzwasser handelt. Die Sensorik 31 kann beispielsweise einen Schalter oder Sensor umfassen, der mit einer Spültaste einer Toilettenspülung verbunden ist und detektiert, wenn die Spültaste betätigt wird und damit Schwarzwasser signalisiert. Eine mit dieser Sensorik 31 drahtlos oder drahtgebunden verbundene und mit dem Antrieb 9 der Abwasserweiche 1 verbundene Steuerung 32 kann in diesem Fall den Antrieb 9 so ansteuern, dass die Führungsplatte 7 in die zweite Position P2 geschwenkt wird. Eine Spannungsversorgung für die Sensorik 31 kann beispielsweise mittels eines Generators erfolgen, der durch ein Wasserrad in der Zulaufleitung eines Spülkastens der Toilettenspülung angetrieben wird. Es kann vorgesehen sein, dass die Führungsplatte 7 standardmäßig in der ersten Position P1 steht, und nur dann in die zweite Position P2 gebracht wird wenn Schwarzwasser signalisiert ist, optional auch mit einer bestimmten zeitlichen Verzögerung. Es kann vorgesehen sein, dass nach Ablauf einer bestimmten Zeit wieder auf Grauwasser umgestellt wird.

In einer Ausführungsform kann bei der Installation der Abwasserweiche 1 ein Bypass 33 vorgesehen sein, der bei Rückstau in der Abwasserweiche 1 Abwasser vom Abwasserzulauf 4 zum Schwarzwasserablauf 6 leitet.

Die Trennung des Abwassers in Grauwasser und Schwarzwasser kann beispielsweise verwendet werden, um das Grauwasser einer Vorrichtung 34 zur Wärmerückgewinnung zuzuleiten, bei der in einem Wärmetauscher Trinkwasser und/oder Heizungswasser einer Warmwasserheizung, insbesondere einer Niedrigtemperaturheizung, durch Abwärme aus dem Grauwasser erwärmt wird. Eine solche Vorrichtung ist beispielsweise in WO 2020/148230 A1 beschrieben.

### BEZUGSZEICHENLISTE

- 1: Abwasserweiche
- 2: Gehäuse
- 2.2: Innenfläche
- 2.3: Innenfläche
- 2.4: Innenfläche
- 3: Hohlraum
- 4: Abwasserzulauf
- 5: Grauwasserablauf
- 6: Schwarzwasserablauf
- 7: Führungsplatte
- 7.1: erste Kante
- 7.2: zweite Kante
- 7.3: dritte Kante
- 7.4: vierte Kante
- 8: Drehwelle
- 9: Antrieb
- 10: Stufe
- 11: Vorsprung
- 12: Sieb
- 12.1: erste Kante
- 12.2: zweite Kante
- 12.3: dritte Kante
- 12.4: vierte Kante
- 13: Schwenkachse
- 14: Zugfeder
- 15: Tasche
- 16: Rückspüldüse
- 17: Lippe
- 18: Nockenbahn
- 19: Motor
- 20: Getriebe
- 30: Abwassersystem
- 31: Sensorik
- 32: Steuerung
- 33: Bypass
- 34: Vorrichtung zur Wärmerückgewinnung

- A1: erster Anschlag
- A2: zweiter Anschlag
- P1: erste Position
- P2: zweite Position

## Patentansprüche

1. Abwasserweiche (1), umfassend ein Gehäuse (2), das einen Hohlraum (3) umschließt, wobei an einem oberen Ende des Gehäuses (2) ein Abwasserzulauf (4) angeordnet ist, der in den Hohlraum (3) mündet, wobei an einem unteren Ende des Gehäuses (2) ein Grauwasserablauf (5) und ein Schwarzwasserablauf (6) angeordnet sind, die mit dem Hohlraum (3) verbunden sind, wobei im Hohlraum (3) eine Führungsplatte (7) mittels eines Antriebs (9) der Abwasserweiche zwischen einer ersten Position (P1) und einer zweiten Position (P2) um eine Drehachse schwenkbar angeordnet ist, derart, dass durch den Abwasserzulauf (4) zulaufendes Abwasser von der Führungsplatte (7) in der ersten Position (P1) in den Grauwasserablauf (5) geleitet und der Schwarzwasserablauf (6) versperrt und in der zweiten Position (P2) der Grauwasserablauf (5) von der Führungsplatte (7) versperrt und das Abwasser in den Schwarzwasserablauf (6) geleitet wird, wobei
ein Sieb (12) vorhanden st, das in der ersten Position (P1) im Abwasserstrom zwischen dem Abwasserzulauf (4) und dem Grauwasserablauf (5) liegt und in der zweiten Position (P2) nicht im Abwasserstrom liegt,
**dadurch gekennzeichnet, dass**
das Sieb (12) an einer von der Drehachse entfernten Kante (7.4) der Führungsplatte schwenkbar angelenkt ist.

2. Abwasserweiche (1) nach Anspruch 1, wobei die Führungsplatte (7) in der ersten Position (P1) an einem ersten Anschlag (A1) einer Innenfläche (2.4) des Gehäuses (2) auf der Seite des Schwarzwasserablaufs (6) anschlägt oder sich zumindest in der Nähe dieses Anschlags (A1) befindet, wobei diese Innenfläche (2.4) insbesondere eine Stufe (10) aufweist, derart, dass die Innenfläche (2.4) in Gebrauchslage oberhalb des ersten Anschlags (A1) zum Hohlraum (3) hin vorspringt.

3. Abwasserweiche (1) nach Anspruch 1 oder 2, wobei eine von der Führungsplatte (7) entfernte Kante (12.4) des Siebes (12) an einem Ende mindestens einer Zugfeder (14) befestigt ist, deren anderes Ende an oder nahe der Wandung des Gehäuses (2) befestigt ist.

4. Abwasserweiche (1) nach einem der vorhergehenden Ansprüche, wobei das Sieb (12) in der zweiten Position (P2) in eine Tasche (15) des Hohlraums (3) verschoben ist.

5. Abwasserweiche (1) nach einem der vorhergehenden Ansprüche, wobei eine Rückspüldüse (16) in der Wandung des Gehäuses (2) angeordnet ist, die auf eine Unterseite des in der zweiten Position (P2) mit einem Gefälle in Richtung des Schwarzwasserablaufs (6) schräg stehenden Siebes (12) gerichtet ist.

6. Abwasserweiche (1) nach einem der vorhergehenden Ansprüche, wobei ferner eine flexible Lippe (17) angeordnet ist, die durch die Bewegung des Siebes (12) während des Schwenkens von der ersten Position (P1) zur zweiten Position (P2) an dessen Oberseite zur Führungsplatte (7) hin entlang streicht.

7. Abwasserweiche (1) nach Anspruch 6, wobei die Lippe (17) so positioniert ist, dass bei Erreichen der zweiten Position (P2) ein Spalt zwischen der Lippe (17) und dem Sieb (12) entsteht.

8. Abwasserweiche (1) nach Anspruch 7, wobei eine Führung für die von der Führungsplatte (7) entfernte Kante (12.4) des Siebes (12) im Gehäuse (2) angeordnet ist, derart, dass die von der Führungsplatte (7) entfernte Kante (12.4) des Siebes (12) gegen Ende der Schwenkbewegung zur zweiten Position (P2) hin nach oben geführt wird, um den Spalt zu schaffen.

9. Abwassersystem (30), umfassend mindestens eine Abwasserweiche (1) nach einem der vorhergehenden Ansprüche, wobei stromaufwärts von der Abwasserweiche (1) eine Sensorik (31) angeordnet ist, die dazu konfiguriert ist, zu signalisieren, wenn es sich bei dem durchfließenden oder als nächstes erwarteten Abwasser um Schwarzwasser handelt, wobei eine mit dieser Sensorik (31) und mit dem Antrieb (9) der Abwasserweiche (1) drahtlos oder drahtgebunden verbundene Steuerung (32) angeordnet ist, die dazu konfiguriert ist, bei Signalisierung von Schwarzwasser den Antrieb (9) so anzusteuern, dass die Führungsplatte (7) in die zweite Position (P2) geschwenkt wird.

10. Abwassersystem (30) nach Anspruch 9, wobei die Steuerung (32) dazu konfiguriert ist, die Führungsplatte (7) standardmäßig in die erste Position (P1) zu schwenken.

11. Abwassersystem (30) nach Anspruch 9 oder 10, wobei ein Bypass (33) angeordnet ist, der bei Rückstau in der Abwasserweiche (1) Abwasser vom Abwasserzulauf (4) zum Schwarzwasserablauf (6) leitet.

## Claims

1. Wastewater diverter (1) comprising a housing (2) enclosing a cavity (3), wherein a wastewater inlet (4) is arranged at an upper end of the housing (2) and opens into the cavity (3), wherein a greywater outlet (5) and a black water outlet (6) are arranged at a lower end of the housing (2), which are connected to the cavity (3), wherein a guide plate (7) is arranged in the cavity (3) so that it can be pivoted about an axis of rotation between a first position (P1) and a second position (P2) by means of a drive (9) of the waste water diverter, such that waste water flowing in through the waste water inlet (4) is directed by the guide plate (7) in the first position (P1) into the grey water outlet (5) and the black water outlet (6) is blocked, and in the second position (P2) the grey water outlet (5) is blocked by the guide plate (7) and the waste water is directed into the black water outlet (6), wherein a screen (12) is provided which, in the first position (P1), is located in the waste water flow between the waste water inlet (4) and the grey water outlet (5) and, in the second position (P2), is not located in the waste water flow, **characterised in that** the screen (12) is pivotably mounted on an edge (7.4) of the guide plate remote from the axis of rotation.

2. Wastewater diverter (1) according to claim 1, wherein the guide plate (7) in the first position (P1) abuts against a first stop (A1) of an inner surface (2.4) of the housing (2) on the side of the black water outlet (6) or is at least located in the vicinity of this stop (A1), wherein this inner surface (2.4) in particular has a step (10) such that the inner surface (2.4) protrudes above the first stop (A1) towards the cavity (3) in a position of use.

3. Wastewater diverter (1) according to claim 1 or 2, wherein an edge (12.4) of the screen (12) remote from the guide plate (7) is attached at one end of at least one tension spring (14), the other end of which is attached to or near the wall of the housing (2).

4. Wastewater diverter (1) according to one of the preceding claims, wherein the screen (12) is displaced into a pocket (15) of the cavity (3) in the second position (P2).

5. Wastewater diverter (1) according to one of the preceding claims, wherein a backwash nozzle (16) is arranged in the wall of the housing (2), which is directed towards an underside of the screen (12) inclined in the second position (P2) with a slope towards the black water drain (6).

6. Wastewater diverter (1) according to one of the preceding claims, wherein further a flexible lip (17) is arranged, which is swept along the upper side of the screen (12) towards the guide plate (7) by the movement of the screen (12) during pivoting from the first position (P1) to the second position (P2).

7. Wastewater diverter (1) according to claim 6, wherein the lip (17) is positioned such that when the second position (P2) is reached, a gap is created between the lip (17) and the screen (12).

8. Wastewater diverter (1) according to claim 7, wherein a guide for the edge (12.4) of the screen (12) remote from the guide plate (7) is arranged in the housing (2) in such a way that the edge (12.4) of the screen (12) remote from the guide plate (7) is guided upwards towards the end of the pivoting movement to the second position (P2) in order to create the gap.

9. Wastewater system (30) comprising at least one wastewater diverter (1) according to one of the preceding claims, wherein a sensor system (31) is arranged upstream of the wastewater diverter (1), which is configured to signal when the wastewater flowing through or expected next is black water, wherein a control system (32) connected wirelessly or in a wired fashion to this sensor system (31) and to the drive (9) of the waste water diverter (1) is arranged, which is configured to control the drive (9) in such a way that the guide plate (7) is pivoted into the second position (P2) when black water is signalled.

10. Wastewater system (30) according to claim 9, wherein the control unit (32) is configured to pivot the guide plate (7) into the first position (P1) by default.

11. Wastewater system (30) according to claim 9 or 10, wherein a bypass (33) is arranged which, in the event of backflow in the wastewater diverter (1), directs wastewater from the wastewater inlet (4) to the black water outlet (6).

## Revendications

1. Séparateur d'eaux usées (1) comprenant un boîtier (2) qui renferme une cavité (3), une arrivée d'eaux usées (4) débouchant dans la cavité (3) étant disposée à une extrémité supérieure du boîtier (2), une évacuation d'eaux grises (5) et une évacuation d'eaux noires (6), qui sont reliées à la cavité (3), étant disposées à une extrémité inférieure du boîtier (2), une plaque de guidage (7) étant disposée dans la cavité (3) de manière à pouvoir pivoter autour d'un axe de rotation entre une première position (P1) et une deuxième position (P2) au moyen d'un entraînement (9) du séparateur d'eaux usées, de telle sorte que les eaux usées arrivant par l'arrivée d'eaux usées (4) sont dirigées par la plaque de guidage (7) dans la première position (P1) vers l' évacuation d'eaux grises (5) et l' évacuation d'eaux noires (6) est bloqué et, dans la deuxième position (P2), l' évacuation d'eaux grises (5) est bloquée par la plaque de guidage (7) et les eaux usées sont dirigées vers l'évacuation d'eaux noires (6), un tamis (12) étant prévu, qui se trouve dans la première position (P1) dans le flux des eaux usées entre l'arrivée d'eaux usées (4) et l'évacuation d'eaux grises (5) et qui ne se trouve pas dans le flux des eaux usées dans la deuxième position (P2), **caractérisé en ce que** le tamis (12) est articulé de manière pivotante sur un bord (7.4) de la plaque de guidage éloigné de l'axe de rotation.

2. Séparateur d'eaux usées (1) selon la revendication 1, dans lequel la plaque de guidage (7) bute dans la première position (P1) contre une première butée (A1) d'une surface intérieure (2.4) du boîtier (2) du côté de l'évacuation d'eaux noires (6) ou se trouve au moins à proximité de cette butée (A1), cette surface intérieure (2.4) présentant en particulier un gradin (10) de telle sorte que la surface intérieure (2.4) dépasse, en position d'utilisation, au-dessus de la première butée (A1) vers la cavité (3).

3. Séparateur d'eaux usées (1) selon la revendication 1 ou 2, dans lequel un bord (12.4) du tamis (12) éloigné de la plaque de guidage (7) est fixé à une extrémité d'au moins un ressort de traction (14) dont l'autre extrémité est fixée à ou près de la paroi du boîtier (2).

4. Séparateur d'eaux usées (1) selon l'une des revendications précédentes, dans lequel le tamis (12) est déplacé dans la deuxième position (P2) dans une poche (15) de la cavité (3).

5. Séparateur d'eaux usées (1) selon l'une des revendications précédentes, dans lequel une buse de rinçage à contre-courant (16) est disposée dans la paroi du boîtier (2) et est orientée vers une face inférieure du tamis (12) incliné dans la deuxième position (P2) avec une pente en direction de l'évacuation d'eaux noires (6).

6. Séparateur d'eaux usées (1) selon l'une des revendications précédentes, dans laquelle est en outre disposée une lèvre flexible (17) qui, sous l'effet du mouvement du tamis (12) lors de son pivotement de la première position (P1) à la deuxième position (P2), effleure la plaque de guidage (7) sur sa face supérieure.

7. Séparateur d'eaux usées (1) selon la revendication 6, dans lequel la lèvre (17) est positionnée de telle sorte qu'un espace se forme entre la lèvre (17) et le tamis (12) lorsque la deuxième position (P2) est atteinte.

8. Séparateur d'eaux usées (1) selon la revendication 7, dans lequel un guide pour le bord (12.4) du tamis (12) éloigné de la plaque de guidage (7) est disposé dans le boîtier (2) de telle sorte que le bord (12.4) du tamis (12) éloigné de la plaque de guidage (7) soit guidé vers le haut vers la fin du mouvement de pivotement vers la deuxième position (P2) afin de créer l'espace.

9. Système d'évacuation d'eaux usées (30) comprenant au moins un séparateur d'eaux usées (1) selon l'une des revendications précédentes, dans lequel un système de capteurs (31) est disposé en amont du séparateur d'eaux usées (1) et est configuré pour signaler lorsque les eaux usées qui s'écoulent ou qui sont attendues ensuite sont des eaux noires, un système de commande (32) relié sans fil ou par câble à ce système de capteurs (31) et à l'entraînement (9) du séparateur d'eaux usées (1) étant prévu, qui est configuré pour commander l'entraînement (9) de manière à ce que la plaque de guidage (7) pivote dans la deuxième position (P2) lorsque la présence d'eaux noires est signalée.

10. Système d'évacuation d'eaux usées (30) selon la revendication 9, dans lequel la commande (32) est configurée pour faire pivoter la plaque de guidage (7) de manière standard dans la première position (P1).

11. Système d'évacuation d'eaux usées (30) selon la revendication 9 ou 10, dans lequel est disposée une dérivation (33) qui, en cas de refoulement dans le séparateur d'eaux usées (1), achemine les eaux usées de l'arrivée d'eaux usées (4) vers l'évacuation d'eaux noires (6).
